# EUROPEAN PATENT SPECIFICATION

(11) **EP 2 431 582 B1**
(45) Date of publication and mention of the grant of the patent: **01.05.2019**
(21) Application number: 10775063.0
(22) Date of filing: 03.05.2010
(51) Int. Cl.: F01M 13/00, F02D 19/06, F02M 25/06, F02M 25/08, A62C 3/10, F01M 13/02, F01M 13/04

(54) **APPARATUS FOR CLEANING THE CRANKCASE OF A DUAL-FUEL ENGINE**
VORRICHTUNG ZUR REINIGUNG DES KURBELGEHÄUSES EINES DOPPELBRENNSTOFFMOTORS
APPAREIL DE NETTOYAGE DU CARTER D'UN MOTEUR À DEUX COMBUSTIBLES

(30) Priority: 13.05.2009 KR 20090041776
(43) Date of publication of application: 21.03.2012
(73) Proprietor: Samsung Heavy Ind. Co., Ltd., Seoul 137-857 (KR)
(72) Inventor: SHIN, Soon Seong, Geoje-si Gyeongsangnam-do 656-793 (KR)
(74) Representative: FRKelly
(86) International application number: PCT/KR2010/002814
(87) International publication number: WO 2010/131861

(56) References cited:
- EP-A2- 0 142 092
- JP-A- S63 154 849
- JP-A- 2004 251 228
- JP-A- 2004 251 228
- JP-A- 2007 198 358
- JP-A- 2007 198 358
- JP-A- 2008 144 625
- JP-A- 2008 144 625
- KR-A- 20030 051 946
- US-A1- 2006 196 482
- US-A1- 2007 144 155

## Description

### Technical Field.

The present invention relates to an apparatus for purging a crank case of a dual fuel engine that prevents fuel gas leaked from the crank case from exploding by removing the fuel gas present in the crank case of the dual fuel engine.

### Background Art.

It is quite common for a liquefied natural gas (LNG) carrier to have a dual fuel engine that can use both diesel fuel and fuel gas.

The LNG carrier uses the duel fuel engine to generate electric power or to propel the ship, and uses natural gas, which is boiloff gas (BOG) naturally generated in order to maintain particular pressure inside an LNG tank, as the fuel gas for the duel fuel engine.

The duel fuel engine is introduced as the diesel engine is preferred to the steam-driven turbine engine in the LNG carrier and the BOG has become a more efficient fuel. The re-liquefying system, which collects and re-liquefies the BOG generated inside the LNG tank of the LNG carrier to LNG and moves the LNG back to the LNG tank, has a disadvantage of increased facility and operation costs. Accordingly, the LNG carrier has become to use the duel fuel engine more widely, owing to the cost advantage of alternately using the diesel fuel with the BOG which is generated in the LNG tank and the BOG forcefully vaporized from the LNG.

JP S63 154849 describes an inactive gas introduction pipe and a gas exhaust pipe connected to a crank case of a gas engine, and a mounted gas concentration sensor. When detecting gas concentration, the sensor attains a given value, a controller opens on-off valves and, and gas in the crank case is scanned by and replaced with an inactive gas. This constitution enables prevention of the occurrence of explosion even if the interior of the crank case is filled with leaked gas.

### [Disclosure]

### [Technical Problem]

In the conventional duel fuel engine of an LNG carrier, the natural gas, which is the fuel gas, is continuously leaked into a crank case, which provides a space for a crank to have rotational motion in a cylinder during the operation. Although the fuel gas leaked into the crank case does not affect the safety of the operation, the fuel gas and oil mist inside the crank case can be leaked out to the engine room when the crank case is opened for repair of the engine, possibly causing an explosion.

Contrived to solve the above problem, the present invention removes the fuel gas present inside the crank case of the duel fuel engine and precisely detects the fuel gas present inside the crank case to minimize the costs and efforts for removing the fuel gas.

### [Technical Solution]

The technical problem is solved by means of the features of claim 1. An apparatus for purging a crank case of a duel fuel engine in accordance with the present invention is an apparatus for purging a crank case of a duel fuel engine and can include: a purge gas supply unit supplying purge gas for purging an inside of the crank case; a supply line providing a path for supplying the purge gas to the inside of the crank case from the purge gas supply unit; an open/close unit installed in the supply line and opening and closing supply of the purge gas; and an exhaust line installed in the crank case for exhaustion.

### Advantageous Effects.

The present invention can prevent the fuel gas leaked out from the crank case from exploding by removing the fuel gas present inside the crank case of the duel fuel engine, and furthermore can minimize the efforts and costs for removing the fuel gas by precisely determining whether the fuel gas is present inside the crank case.

### Description of Drawings.

FIG. 1 illustrates the configuration of an apparatus for purging a crank case of a duel fuel engine in accordance with a first embodiment of the present invention.
FIG. 2 illustrates the configuration of an apparatus for purging a crank case of a duel fuel engine in accordance with a second embodiment of the present invention.

**<Description of Key Elements>**

| | |
|---|---|
| 10: crank case | 110, 210: purge gas supply unit |
| 120, 220: supply line | 121, 221: pressure control valve |
| 122: branch line | 130, 230: open/close unit |
| 140, 240: exhaust line | 150, 250: detection unit |
| 151, 251: sampling tube | 151a: cover |
| 152: ejector | 152a: first inlet |
| 152b: outlet | 152c: second inlet |
| 152d: discharge line | 153, 253: gas sensor |
| 154, 254: flame arrest | 155, 255: mist separator |
| 155a: re-supply line | 160, 260: controller |
| 161, 261: flow meter | 162, 262: display unit |
| 252: extraction pump | |

### Mode for Invention.

Hereinafter, some embodiments of the present invention will be described with reference to the accompanying drawings. Throughout the description of the present invention, when describing a certain technology is determined to evade the point of the present invention, the pertinent detailed description will be omitted.

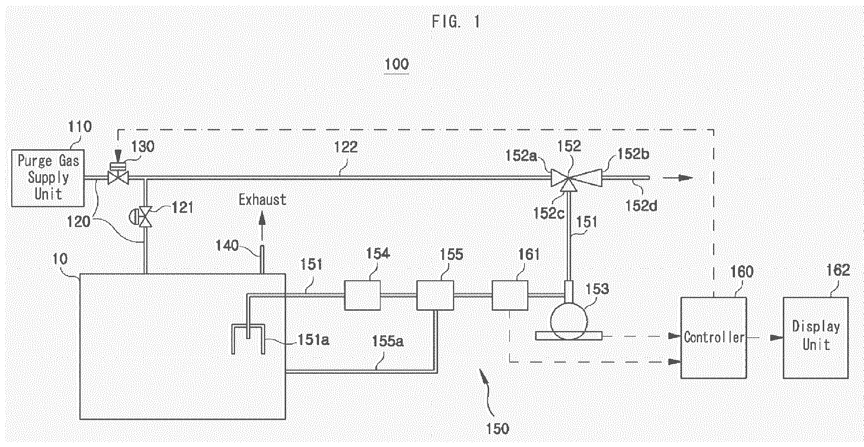

FIG. 1 illustrates a configuration of an apparatus for purging a crank case of a duel fuel engine in accordance with a first embodiment of the present invention. As illustrated, an apparatus 100 for purging a crank case of a duel fuel engine in accordance with a first embodiment of the present invention is an apparatus for purging a crank case 10 of a duel fuel engine and can include a purge gas supply unit 110, a supply line 120 connected to the crank case 10 from the purge gas supply unit 110, an open/close unit 130 installed in the supply line 120, and an exhaust line 140 installed in the crank case 10.

The purge gas supply unit 110 supplies purge gas for purging the inside of the crank case 10. An example used for the purge gas can be nitrogen gas.

The supply line 120 provides a path for supplying the purge gas into the crank case 10 from the purge gas supply unit 110, opens and closes the supply of the purge gas by the open/close unit 130, and can be installed with a pressure control valve 121 for controlling the pressure of the supplied purge gas.

Used for the open/close unit 130 can be, for example, an open/close valve, which opens and closes a flow path of the purge gas flowing through the supply line 120, or a flow control valve, which controls the quantity of the purge gas. The open/close unit 130 can be opened and closed manually by a user or according to a control signal of a controller 160, which will be described later.

The exhaust line 140 is installed in the crank case 10 for exhaustion so that gas inside the crank case 10 can be discharged when the purge gas is supplied to the crank case 10 through the supply line 120 from the purge gas supply unit 110 by opening the open/close unit 130.

The apparatus 100 for purging a crank case of a duel fuel engine in accordance with a first embodiment of the present invention can also include a detection unit 150 that detects fuel gas present inside the crank case 10.

The detection unit 150 can also include a sampling tube 151, which is connected to the crank case 10, a pumping unit, which extracts gas through the sampling tube 151 from the crank case 10, and a gas sensor 152, which is installed on the sampling tube 151 and detects the fuel gas included in the gas extracted from the crank case 10.

The sampling tube 151 can have a cover 151a installed on an end thereof that is placed inside the crank case 10 in order to prevent sputtering or falling lubricating oil from getting attached. The cover 151a can be formed in the shape of a cup in order to surround the end of the sampling tube 151 effectively while allowing the gas to be extracted through the end of the sampling tube 151. Furthermore, The cover 151a can be fixed by being coupled to the end of the sampling tube 151, or can be fixed on an inner face of the crank case 10.

The pumping unit can include an ejector 152 that extracts the gas from the crank case 10 by a difference in pressure between an inside and an outside caused by the purge gas supplied from the purge gas supply unit 110 in the present embodiment.

The ejector 152 is operated by the purge gas supplied from the purge gas supply unit 110 to allow the gas inside the crank case 10 to be extracted through the sampling tube 151. Said ejector 152 allows the purge gas of the purge gas supply unit 110 to be supplied to a first inlet 152a through a branch line 122, which is branched from the supply line 120, to have the purge gas discharged to a discharge line 152d through an outlet 152b, and allows the gas present inside the crank case 10 drawn in by the difference in pressure between the inside and the outside through the sampling tube 151 connected to a second inlet 152c to have the gas supplied to the gas sensor 153.

Used for the gas sensor 153 can be a sensor that detects methane contained in the fuel gas, for example, the natural gas which is the BOG generated naturally or forcefully from an LNG tank of an LNG carrier, or detects other fuel gases that have risks of explosion. Meanwhile, the gas sensor 153 can also encompass a display (not shown) for indicating or displaying the quantity or concentration of the fuel gas contained in the gas extracted through the sampling tube 151.

In the detection unit 150, any one or both of a flame arrest 154 and a mist separator 155 can be installed in the sampling tube 151 before the gas sensor 153.

The flame arrest 154 blocks flames from being transferred to the crank case 10 through the sampling tube 151 from, for example, the gas sensor 153. For this, the flame arrest 154 can have a variety of components, such as a mesh net or a filtering member, inside thereof.

The mist separator 155 separates oil mist contained in the gas extracted from the crank case 10 through the sampling tube 151. For this, the mist separator 155 can have a variety of components, such as a mesh net or a filtering member, inside thereof, and the oil mist separated by the mist separator 155 can be re-supplied to the crank case 10 through a re-supply line 155a.

Meanwhile, the apparatus 100 for purging a crank case of a duel fuel engine in accordance with a first embodiment of the present invention can also include a controller 160 for controlling the open/close unit 130 by receiving a detection signal outputted from the gas sensor 153.

The controller 160 allows the purge gas to be supplied as an operating fluid to the ejector 152 by opening the open/close unit 130 in order to operate the ejector 152 when the gas is extracted through the sampling tube 151, calculates the quantity or concentration of the fuel gas, for example, the natural gas having the risks of explosion, in the gas, which is extracted by the sampling tube 151, from the detection signal outputted from the gas sensor 153, and closes the open/close unit 130 by determining that purging of the crank case 10 has been completed if the calculated value is below a predetermined value.

The controller 160 receives detection signals outputted respectively from a flow meter 161, which is installed in the sampling tube 151 and detects the quantity of gas extracted from the crank case 10, and the gas sensor 153, and can display the quantity or concentration of the fuel gas contained in the gas extracted from the crank case 10 on a display unit 162. In other words, the controller 160 calculates the quantity of gas extracted from the crank case 10 through the flow meter 161, and calculates the quantity of gas passing through the sampling tube 151 through the gas sensor 153, thereby allowing the quantity or concentration of the fuel gas contained in the gas extracted from the crank case 10 to be displayed through the display unit 162.

Meanwhile, the flow meter 161 can have a micro filter installed therein to remove foreign substances contained in the gas extracted through the sampling tube 151.

The above-described apparatus 100 for purging a crank case of a duel fuel engine in accordance with a first embodiment of the present invention works as follows.

The purge gas having its pressure controlled by the pressure control valve 121 is supplied from the purge gas supply unit 110 to the crank case 10 through the supply line 120 by the opening of the open/close unit 130. Accordingly, the inside of the crank case 10 is purged by having the gas present inside the crank case 10 discharged through the exhaust line 140.

Here, the ejector 152 extracts the gas present inside the crank case 10 through the sampling tube 151 by using the purge gas supplied through the branch line 122 from the purge gas supply unit 110 as the operating fluid and allows the extracted gas to be supplied to the gas sensor 153, and the gas sensor 153 detects the quantity or concentration of fuel gas present in the gas extracted through the sampling tube 151 and outputs the detected quantity or concentration as a detection signal to the controller 160. The controller 160 determines that the crank case 10 is sufficiently purged to have no risk of explosion when the crank case 10 is opened if the quantity or concentration of fuel gas detected from the detection signal is below a predetermined value, and closes the open/close unit 130 to stop the supply of the purge gas from the purge gas supply unit 110.

The controller 160 can receive the detection signals respectively outputted from the flow meter 161 and the gas sensor 153 and calculate the quantity or concentration of fuel gas present in the gas extracted through the sampling tube 151 for display through the display unit 162.

Meanwhile, in case the gas sensor 153 has a display part that displays the detected quantity or concentration of fuel gas, an operator can check the detected quantity or concentration in person through said display part of the gas sensor 153 or through the display unit 162 controlled by the controller 160 and manually close the open/close unit 130 if it is determined that the crank case 10 is purged.

Moreover, the liquid-phase lubricating oil is prevented from flowing into the sampling tube 151 by the cover 151a inside the crank case 10, and flames generated from the gas sensor 153, etc. are prevented from back-flowing to the crank case 10 through the sampling tube 151 by the flame arrest 154. Furthermore, oil mist present in the gas extracted through the sampling tube 151 is separated by the mist separator 155 and resupplied to the crank case 10 through the re-supply line 155a.

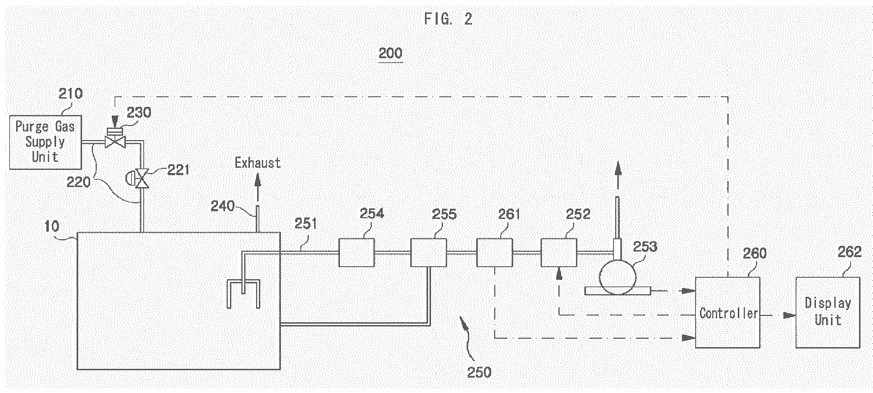

FIG. 2 illustrates the configuration of an apparatus for purging a crank case of a duel fuel engine in accordance with a second embodiment of the present invention. As illustrated, like the apparatus 100 for purging a crank case of a duel fuel engine in accordance with the first embodiment of the present invention, an apparatus 200 for purging a crank case of a duel fuel engine in accordance with a second embodiment of the present invention is an apparatus for purging a crank case 10 of a duel fuel engine and can include a purge gas supply unit 210 supplying purge gas for purging an inside of the crank case 10, a supply line 220 providing a path for supplying the purge gas into the crank case 10 from the purge gas supply unit 210, an open/close unit 230 installed in the supply line 220 and opens and closes the supply of the purge gas, and an exhaust line 240 installed in the crank case 10 for exhaustion. The apparatus 200 for purging a crank case of a duel fuel engine in accordance with a second embodiment of the present invention can also include a detection unit 250 that detects fuel gas present inside the crank case 10, and further include a controller 260 that receives a detection signal outputted from a gas sensor 253 included in the detection unit 250 and controls the open/close unit 230.

The purge gas supply unit 210, the supply line 220, the open/close unit 230, the exhaust line 240, the detection unit 250 and the controller 260 of the apparatus 200 for purging a crank case of a duel fuel engine in accordance with a second embodiment of the present invention have been described in detail with reference to the apparatus 100 for purging a crank case of a duel fuel engine in accordance with the first embodiment of the present invention, and thus no description thereof will be provided herein, but the differences thereof will be described herein.

Unlike the previous embodiment, in the detection unit 250, a pumping unit for extracting the gas from the crank case 10 through a sampling tube 251 connected to the crank case 10 is installed in the sampling tube 251 to constitute an extraction pump 252 that provides pumping power for extracting the gas from the crank case 10.

The extraction pump 252 is operated by switch-operation of the operator or by a control signal of the controller 260 to provide the pumping power to the sampling tube 251.

The above-described apparatus 200 for purging a crank case of a duel fuel engine in accordance with a second embodiment of the present invention works as follows.

The purge gas having its pressure controlled by a pressure control valve 221 is supplied from the purge gas supply unit 210 to the crank case 10 through the supply line 220 by the opening of the open/close unit 230. Accordingly, the inside of the crank case 10 is purged by having the gas present inside the crank case 10 discharged through the exhaust line 240.

Here, the gas present inside the crank case 10 is extracted through the sampling tube 251 by the operation of the extraction pump 252, and allows the extracted gas to be supplied to the gas sensor 253 through a flame arrest 254 that prevents flames from back-flowing and through a mist separator 255 that separates oil mist. Then, the gas sensor 253 detects the fuel gas present in the gas extracted through the sampling tube 251 and outputs the detected fuel gas as a detection signal to the controller 260. The controller 260 determines that the crank case 10 is sufficiently purged to have no risk of explosion when the crank case 10 is opened if the quantity or concentration of fuel gas detected from the detection signal is below a predetermined value, and closes the open/close unit 230.

Like the apparatus 100 for purging a crank case of a duel fuel engine in accordance with the first embodiment of the present invention, the controller 260 can receive the detection signals respectively outputted from a flow meter 261 and the gas sensor 253 and calculate the quantity or concentration of fuel gas present in the gas extracted through the sampling tube 251 for display through the display unit 262. In case the gas sensor 253 has a display part that displays the detected quantity or concentration of fuel gas, the operator can check the detected quantity or concentration in person through said display part of the gas sensor 253 or through the display unit 262 and manually close the open/close unit 230 if it is determined that the crank case 10 is purged.

As such, according to some embodiments of the present invention, in the case that a duel fuel engine that can use both diesel fuel and fuel gas in, for example, an LNG carrier is used to produce electric power or to propel the ship, it is possible to prevent the fuel gas and oil mist present in the crank case from leaking into the engine room and causing explosion when the crank case is opened for engine repair. Furthermore, the efforts and costs for removing the fuel gas can be minimized by precisely determining whether the fuel gas is present inside the crank case and by supplying only the required quantity of the fuel gas to the crank case.

Hitherto, some embodiments of the present invention have been described, but it shall be appreciated that the present invention can be readily modified by a person of ordinary skill in the art to which the present invention pertains, and any such modifications shall be included in the technical ideas of the present invention, which shall be defined by the appended claims.

## Claims

1. An apparatus (100, 200) for purging a crank case of a duel fuel engine, the apparatus comprising:
a purge gas supply unit (110, 210) configured to supply purge gas for purging an inside of the crank case;
a supply line (120, 220) configured to provide a path for supplying the purge gas to the inside of the crank case from the purge gas supply unit;
an open/close unit installed in the supply line (120, 220) and configured to open and close supply of the purge gas;
an exhaust line (140, 240) installed in the crank case for exhaustion; and
a detection unit (150, 250) configured to detect fuel gas present inside the crank case
wherein the detection unit (150, 250) comprises:
a sampling tube (151, 251) connected to the crank case and comprising a cover installed on an end thereof placed inside the crank case to prevent lubricating oil from being attached;
a pumping unit configured to extract gas from the crank case through the sampling tube;
a gas sensor (153, 253) installed in the sampling tube and configured to detect fuel gas contained in the gas extracted from the crank case;
a flow meter (161, 261) installed in the sampling tube and configured to detect a quantity of the gas extracted from the crank case; and
a flame arrest (154, 254) installed in the sampling tube (151, 251) before the gas sensor (153, 253) and configured to block flames from being transferred to the crank case.

2. The apparatus (100, 200) of claim 1, wherein the pumping unit comprises an ejector (152) that is configured to extract the gas from the crank case by the difference in pressure between the inside and an outside of the crank case caused by the purge gas supplied from the purge gas supply unit.

3. The apparatus (100, 200) of claim 1, wherein the pumping unit comprises an extraction pump (252) installed in the sampling tube and configured to provide pumping power for extracting the gas from the crank case.

4. The apparatus (100, 200) of claim 1, wherein the detection unit further comprises a mist separator (155, 255) installed in the sampling tube before the gas sensor (153, 253) and configured to separate oil mist contained in the gas extracted from the crank case.

5. The apparatus (100, 200) of claim 4, wherein the detection unit further comprises a re-supply line (155a) configured to resupply the oil mist separated by the mist separator to the crank case.

6. The apparatus (100, 200) of claim 1, further comprising a controller (160, 260) configured to receive a detection signal outputted from the gas sensor (153, 253) and control the open/close unit.

7. The apparatus (100, 200) of claim 6, wherein the controller (160, 260) is configured to receive detection signals respectively from the flow meter (161, 261) and the gas sensor (153, 253) and to display a quantity or concentration of the fuel gas contained in the gas extracted from the crank case through a display unit.

## Patentansprüche

1. Vorrichtung (100, 200) zum Spülen eines Kurbelgehäuses eines Doppelbrennstoffmotors, wobei die Vorrichtung Folgendes umfasst:
eine Spülgasversorgungseinheit (110, 210), die konfiguriert ist, um Spülgas zum Spülen eines Inneren des Kurbelgehäuses bereitzustellen;
eine Versorgungsleitung (120, 220), die konfiguriert ist, um einen Weg zum Liefern des Spülgases zum Inneren des Kurbelgehäuses von der Spülgasversorgungseinheit bereitzustellen;
eine Auf-/Zu-Einheit, die in der Versorgungsleitung (120, 220) installiert ist und konfiguriert ist, um die Lieferung des Spülgases zu öffnen und zu schließen;
eine Entleerungsleitung (140, 240), die im Kurbelgehäuse zur Entleerung installiert ist; und
eine Detektionseinheit (150, 250), die konfiguriert ist, um Brenngas zu erkennen, das innerhalb des Kurbelgehäuses vorhanden ist,
wobei die Detektionseinheit (150, 250) Folgendes umfasst:
ein Probenentnahmeröhrchen (151, 251), das mit dem Kurbelgehäuse verbunden ist und eine Abdeckung umfasst, die an einem Ende davon installiert ist und innerhalb des Kurbelgehäuses angeordnet ist, um zu verhindern, dass Schmieröl daran anhaftet;
eine Pumpeinheit, die konfiguriert ist, um Gas aus dem Kurbelgehäuse durch das Probenentnahmeröhrchen abzuziehen;
einen Gassensor (153, 253), der in dem Probenentnahmeröhrchen installiert ist und konfiguriert ist, um Brenngas, das in dem aus dem Kurbelgehäuse abgezogenen Gas enthalten ist, zu erkennen;
einen Durchflussmesser (161, 261), der in dem Probenentnahmeröhrchen installiert ist und konfiguriert ist, um eine Menge des aus dem Kurbelgehäuse abgezogenen Gases zu erkennen; und
eine Flammensperre (154, 254), die in dem Probenentnahmeröhrchen (151, 251) vor dem Gassensor (153, 253) installiert ist und konfiguriert ist, um zu verhindern, dass Flammen an das Kurbelgehäuse übertragen werden.

2. Vorrichtung (100, 200) nach Anspruch 1, wobei die Pumpeinheit eine Ausstoßvorrichtung (152) umfasst, die konfiguriert ist, um das Gas aus dem Kurbelgehäuse durch die Differenz des Drucks zwischen dem Inneren und einem Äußeren des Kurbelgehäuses, die durch das Spülgas, das von der Spülgasversorgungseinheit bereitgestellt wird, verursacht wird, abzuziehen.

3. Vorrichtung (100, 200) nach Anspruch 1, wobei die Pumpeinheit eine Extraktionspumpe (252) umfasst, die in dem Probenentnahmeröhrchen installiert ist und konfiguriert ist, um Pumpleistung zum Abziehen des Gases aus dem Kurbelgehäuse bereitzustellen.

4. Vorrichtung (100, 200) nach Anspruch 1, wobei die Detektionseinheit ferner einen Nebelabscheider (155, 255) umfasst, der in dem Probenentnahmeröhrchen vor dem Gassensor (153, 253) installiert ist und konfiguriert ist, um Ölnebel, der in dem aus dem Kurbelgehäuse abgezogenen Gas enthalten ist, abzutrennen.

5. Vorrichtung (100, 200) nach Anspruch 4, wobei die Detektionseinheit ferner eine Rücklieferleitung (155a) umfasst, die konfiguriert ist, um den vom Nebelabscheider abgetrennten Ölnebel wieder an das Kurbelgehäuse zurückzuliefern.

6. Vorrichtung (100, 200) nach Anspruch 1, ferner umfassend eine Steuerung (160, 260), die konfiguriert ist, um ein Detektionssignal, das von dem Gassensensor (153, 253) ausgegeben wird, zu empfangen und die Auf-/Zu-Einheit zu steuern.

7. Vorrichtung (100, 200) nach Anspruch 6, wobei die Steuerung (160, 260) konfiguriert ist, um Detektionssignale jeweils vom Durchflussmesser (161, 261) und vom Gassensor (153, 253) zu empfangen und eine Menge oder Konzentration des Brenngases, das in dem aus dem Kurbelgehäuse abgezogenen Gas enthalten ist, über eine Anzeigeeinheit anzuzeigen.

## Revendications

1. Appareil (100, 200) de nettoyage d'un carter d'un moteur à deux combustibles, l'appareil comprenant :
une unité d'alimentation en gaz de nettoyage (110, 210) conçue pour fournir du gaz de nettoyage pour nettoyer l'intérieur du carter ;
une conduite d'alimentation (120, 220) conçue pour fournir un trajet pour la fourniture du gaz de nettoyage à l'intérieur du carter à partir de l'unité d'alimentation en gaz de nettoyage ;
une unité d'ouverture/de fermeture installée dans la conduite d'alimentation (120, 220) et conçue pour ouvrir et fermer l'alimentation en gaz de nettoyage ;
une conduite d'échappement (140, 240) installée dans le carter pour l'échappement ; et
une unité de détection (150, 250) conçue pour détecter le gaz combustible présent à l'intérieur du carter,
dans lequel l'unité de détection (150, 250) comprend :
un tube d'échantillonnage (151, 251) relié au carter et comprenant un couvercle installé sur une extrémité de celui-ci placé à l'intérieur du carter pour empêcher la fixation d'huile de lubrification ;
une unité de pompage conçue pour extraire le gaz du carter à travers le tube d'échantillonnage ;
un capteur de gaz (153, 253) installé dans le tube d'échantillonnage et conçu pour détecter le gaz combustible contenu dans le gaz extrait du carter ;
un débitmètre (161, 261) installé dans le tube d'échantillonnage et conçu pour détecter une quantité du gaz extrait du carter ; et
un pare-flammes (154, 254) installé dans le tube d'échantillonnage (151, 251) avant le capteur de gaz (153, 253) et conçu pour empêcher le transfert de flammes dans le carter.

2. Appareil (100, 200) selon la revendication 1, dans lequel l'unité de pompage comprend un éjecteur (152) qui est conçu pour extraire le gaz du carter par la différence de pression entre l'intérieur et l'extérieur du carter provoquée par le gaz de nettoyage fourni par l'unité d'alimentation en gaz de nettoyage.

3. Appareil (100, 200) selon la revendication 1, dans lequel l'unité de pompage comprend une pompe d'extraction (252) installée dans le tube d'échantillonnage et conçue pour fournir une puissance de pompage pour extraire le gaz du carter.

4. Appareil (100, 200) selon la revendication 1, dans lequel l'unité de détection comprend en outre un séparateur de brouillard (155, 255) installé dans le tube d'échantillonnage avant le capteur de gaz (153, 253) et conçu pour séparer le brouillard d'huile contenu dans le gaz extrait du carter.

5. Appareil (100, 200) selon la revendication 4, dans lequel l'unité de détection comprend en outre une conduite de réalimentation (155a) conçue pour réalimenter le brouillard d'huile séparé par le séparateur de brouillard dans le carter.

6. Appareil (100, 200) selon la revendication 1, comprenant en outre un dispositif de commande (160, 260) conçu pour recevoir un signal de détection généré par le capteur de gaz (153, 253) et pour commander l'unité d'ouverture/de fermeture.

7. Appareil (100, 200) selon la revendication 6, dans lequel le dispositif de commande (160, 260) est conçu pour recevoir des signaux de détection respectivement du débitmètre (161, 261) et du capteur de gaz (153, 253) et pour afficher une quantité ou une concentration du gaz combustible contenu dans le gaz extrait du carter au moyen d'une unité d'affichage.
